# EUROPÄISCHE PATENTSCHRIFT

(11) **EP 0 809 764 B1**
(45) Veröffentlichungstag und Bekanntmachung des Hinweises auf die Patenterteilung: **21.03.2001**
(21) Anmeldenummer: 95942150.4
(22) Anmeldetag: 13.12.1995
(51) Int. Cl.: F16H 31/00

(54) **GETRIEBE**
TRANSMISSION
TRANSMISSION

(43) Veröffentlichungstag der Anmeldung: 03.12.1997
(73) Patentinhaber: NL Consult B.V., 2271 AE Voorburg (NL); Muller, Willem Jan Maria, 82256 Fürstenfeldbruck (DE)
(72) Erfinder: MULLER, Willem, Jan, Maria, D-82256 Fürstenfeldbruck (DE); DE VRIES, Hendrik, Cornelis, Pieter, NL-6705 DJ Wageningen (NL)
(74) Vertreter: Alber, Norbert, Dipl.-Ing.
(86) Internationale Anmeldenummer: EP9504938
(87) Internationale Veröffentlichungsnummer: WO9721941

(56) Entgegenhaltungen:
- DE-A- 3 624 324
- DE-A- 4 000 706
- FR-A- 756 886
- US-A- 4 753 120

## Beschreibung

Die Erfindung betrifft ein stufenloses Fahrgetriebe, mit wahlfreier Vorwärts-/Rückwärtsfahrt und mit - unabhängig von den Parametern der das Getriebe treibenden Antriebseinheit - einstellbarem oder stufenlos verstellbarem Drehmoment; dabei werden Seile, die um Trommeln gewickelt sind - welche mit den Rädern oder Achsen verbunden sind - mittels Zylindern hin und her bewegt.

Stufenlose oder quasi-stufenlose Fahrantriebe sind bereits in vielfachen Gattungen und Bauformen vorhanden. Es gibt synchronisierte vielstufige Getriebe sowie hybride mechanisch-hydraulische Getriebe. Der Bauaufwand für derartige Getriebe ist aber - abhängig von der Bandbreite zwischen minimaler und maximaler Drehzahl, Anzahl der Schaltstufen, Erfordernis der stufenlosen Unterteilung etc. - hoch. Daß sie trotzdem viel Anwendung finden und daß das Getriebe bereits über längere Zeit die wichtigste Komponente in der Fahrzeugentwicklung darstellt, zeigt die Bedeutung, welche dem stufenlosen Getriebe allgemein beigemessen wird. Analoges ist bezüglich elektrischer und hydraulischer Fahrantriebe festzustellen. Dies, obwohl die bisherigen hydraulischen Antriebe zwar stufenlos sind, jedoch das Manko haben, daß ihre Kraftentwicklung im Verhältnis zur Drehzahl der Hydromotoren zunimmt. Dadurch benötigen sie in etwa die doppelte Antriebsleistung wie mechanische Getriebe, um bei sehr niedrigen Geschwindigkeiten das gleiche Moment auf den Boden zu bringen. Deswegen neigt man dazu, stärkere Hydromotoren - Schluckvolumen und/oder Betriebsdruck - zu verwenden. Das erfordert wieder einen höheren Aufwand auf Seiten der Antriebsquelle und beides ergibt eine für die benötigte Leistung überdimensionierte Konstellation bei höheren Geschwindigkeiten. Weiter ist das Verhältnis zwischen Maximum- und Minimumdrehzahl der Hydromotoren begrenzt; ohne aufwendige Zusätze wird eine Fahrzeuggeschwindigkeit von mehr als 40 Km/h schwer zu erreichen sein.

Auch Seilantriebe sind bereits in vielfacher Form bekannt. Schon in frühesten Zeiten wurde Reibungswiderstand zwischen Seil und Trommel oder Achse in Vorrichtungen zum Feuermachen, Heben und Drehen benützt. Eine derartige Drehvorrichtung z. B. sieht so aus, daß das eine Ende eines Seiles federnd an einem ortsfesten Punkt befestigt ist. Dann wird das Seil einige Male um eine - zur Drehung zu bringende - Achse gewickelt und das andere Ende wird durch Zug so festgezogen, daß die Reibung ausreicht, um das benötigte Drehmoment zu übertragen. Die Kraft der Feder und die Anzahl der Wicklungen bestimmen im Wesentlichen das maximal zu übertragende Drehmoment.

In der DE 3624324 Al wird eine derartige Konstruktion als (Hand)Antrieb eines Fahrzeuges vorgestellt. Das obengenannte "andere Ende" des Seiles ist an einem schwenkbar gelagerten Hebearm befestigt. Wenn dieser hin bewegt wird, spannt sich die Feder, entsteht eine Reibung zwischen Seil und Achse und die Achse dreht sich; wenn der Hebel her bewegt wird, entspannt sich die Feder und zieht das Seil, ohne die Achse zu drehen, in die Ausgangsposition zurück. Um einen kontinuierlichen Antrieb zu erreichen kann - spiegelbildig - an der Rückseite des Hebels ein zweites Seil befestigt werden, das über eine Umlenkrolle auch zur Achse geführt wird, diese umwickelt und am anderen Ende federnd befestigt wird. Weiter stellt dieser Schrift zwei Möglichkeiten zur Drehmomentverstellung vor. Die erste beinhaltet eine Verschiebungsmöglichkeit der Befestigung des Seiles am Hebel in Richtung Hebelarmgelenk, wodurch die Zuglänge per Hebelbewegung geändert werden kann. Die zweite beinhaltet eine radiale Verstellmöglichkeit der Umlenkrolle zum Hebelarm, wodurch - je nach Stellung dieser Rolle - das Seil einen längeren oder kürzeren Weg bei Betätigung des Hebelarmes zu gehen hat und somit die Trommel mehr oder weniger in ihrer Abwicklung mitnehmen wird.

Dieser Antrieb weist jedoch schwerwiegende Nachteile auf Sie betreffen zunächst den konstruktiven Aufwand, um zu einem funktionssicheren Kraftfahrzeug zu kommen. Auch fehlt die für ein Kraftfahrzeug notwendige wahlfreie Dreh- bzw. Fahrtrichtung (vorwärts/rückwärts). Nachteilig ist weiter, daß die Drehbewegung im Moment der Umschaltung von Hin- zu Herbewegung des Hebelarms kurzfristig unterbrochen wird. Ein prohibitiver Nachteil für die Anwendung in einem Kraftfahrzeug jedoch liegt darin, daß jeder Zuglänge bzw. Zugverlängerung aus dem Spannen der Feder kommen muß. Die Feder muß - bei gegebener Anzahl der Seilwicklungen - so stark sein, daß schon durch geringen Hebelzug das Seil so festgezogen wird, daß das Drehmoment übertragen wird. Bei längeren Zügen muß immer mehr Kraft verwendet werden, um die Federkraft zu überwinden, was zu Lasten des zu übertragenden Drehmoments geht.

Letzteres Problem wäre gelöst mit dem vom ersten Erfinder dieser Anmeldung im Jahrbuch der VDI, Abteilung Landtechnik, 1989, Seiten 72-74 ("Neue Methode für Radantriebe") vorgestellten Seilantrieb. Im Unterschied zum kontinuierlichen Antrieb nach DE 3624324 A1 benötigt er nicht zwei Seile, wovon je ein Ende federnd befestigt ist. Statt dessen stelle man sich ein endloses Seil vor, welches auf den Umfang einer Trommel, die - direkt oder über eine Achse - mit dem anzutreibenden Rad verbunden ist, in einigen Windungen aufgewickelt ist. Die von der Trommel abstrebenden Seil-Teile werden über Umlenkrollen, von denen eine fest und eine federnd befestigt ist, wieder zur Trommel zurückgeführt und separiert vom ersten Wicklungsbereich erneut, diesmal jedoch in umgekehrter Richtung, aufgewickelt.

Auf diese Art und Weise entsteht eine symmetrische Anordnung, bestehend aus einer Trommel mit zwei darauf aufgebrachten, getrennten, Wicklungsbereichen sowie zwei Umlenkrollen, deren Drehachse parallel zu einander und lotrecht zur Drehachse der Trommel angeordnet sind. Diese drei Teile werden durch das endlose Seil in der angegebenen Art wirksam miteinander verbunden.

Wird innerhalb dieser Anordnung das Seil in etwa gespannt gehalten und das Seil durch Zwischensetzen eines zweiseitig wirkenden Hydraulik- oder Pneumatikzylinders, z. B. zwischen der Trommel und der ersten, etwa der oberen, Umlenkrolle, in eine intermittierende, also hin- und herverlaufende, translatorische Bewegung versetzt., so wird dadurch immer jeweils einer der Wicklungsbereiche der Trommel auf Zug beansprucht, während im anderen Wicklungsbereich das Seil entspannt wird, wodurch die Wicklung loser ist. Dieses Lösen der anderen Wicklung wird zwar prinzipiell aufgrund der geschlossenen Ausbildung des Zugseiles aufgehoben, wodurch sogar unter beiden Wicklungsbereichen eine einander entgegengesetzte Drehkraft, und somit Torsion, auf die Trommel ausgeübt werden könnte. Jedoch ist die Reibung zwischen dem Seil und der Trommel immer in demjenigen Bereich, welcher unmittelbar vom Zylinder nächstliegend auf Zug beansprucht wird, gegenüber dem anderen Wicklungsbereich größer.

Von mehr Bedeutung ist diesbezüglich aber die federnde Anordnung der zweiten, vom Zylinder entfernten, Umlenkrolle gegenüber einem ortsfesten Punkt. Sie spannt das Seil in dem einen - auf Zug beanspruchten - Wicklungsbereich und bewirkt eine derartige Entspannung des Seiles in dem anderen Wicklungsbereich, daß ein Durchrutschen zwischen Trommelumfang und Seilwicklung stattfindet. Dieser Bewegungsvorgang führt dazu, daß die Trommel abwechselnd jeweils einmal durch den einen und einmal durch den anderen Wicklungsbereich drehend angetrieben wird, und zwar immer mit dem gleichen, also konstantem, Drehmoment, da die Federspannung in jeder Phase des Zugtrajektes immer gleich ist. Dennoch weist auch dieses Getriebe Nachteile auf, welche eine Anwendung als Fahrantrieb in einem Kraftfahrzeuges verhindern. Eine Umkehrung der Drehrichtung der angetriebenen Trommel ist nur möglich durch Wechsel des Einsatzortes des Zylinders von einer der einen Umlenkrolle benachbarten Position in eine der anderen Umlenkrolle benachbarten Position, wobei zusätzlich auch die nunmehr andere Umlenkrolle unter Federeinwirkung gesetzt werden müßte, während die ursprünglich gefederte Umlenkrolle nichtfedernd befestigt sein muß.

Eine derartige Umstellung ist für den Praxisbetrieb, in dem der Wechsel zwischen Vorwärts- und Rückwärtsfahrt sehr häufig ist, nicht möglich. Ein weiterer, entscheidender, Nachteil liegt darin, daß eine intermittierende translatorische Bewegung mit einer bestimmten Hublänge bei jedem Hub auch immer den gleichen Drehwinkel der umwickelten Trommel bewirkt, mithin für den Anwendungsfall eines Fahrzeuges keine Drehzahlveränderung am anzutreibenden Rad und somit keine Drehmomentveränderung möglich ist.

Ein weiterer gattungsgemäßer Antrieb ist aus der DE 40 00 706 A1 bekannt. Dabei ist eine Seiltrommel fest mit einer anzutreibenden Radnabe verbunden und weist zwei Wicklungsbereiche auf, auf denen zwei Seile in gegenläufiger Richtung aufgewickelt sind. Die Seilenden sind an einem Hebelrohr befestigt und können durch leichte Drehung des Hebelrohres auf- und abgewickelt werden, wobei die auf der Trommel aufgewickelten Seile gestrafft bzw. gelockert werden. Diese Drehung erfolgt automatisch beim Betätigen eines am Hebelrohr befestigten Griffs. Wird nun der Griff vor- und zurück bewegt, so wird dadurch immer jeweils einer der Wicklungsbereiche der Trommel auf Zug beansprucht, während das Seil auf dem anderen Wicklungsbereiche entspannt wird, wodurch die Trommel an dem ersteren Bereich mitgenommen wird und an dem letzteren Bereich nahezu freiläuft. Durch Querschwenken des Griffs kann zwischen einem Vorwärts- und einem Rückwärtsgang umgeschaltet werden.

Ein derartiges Hebelgetriebe ist für einen Motorantrieb äußerst ungeeignet, da die Antriebselemente - Handgriff und Hebelrohr - keine geraden Bewegungsbahnen durchlaufen. Die durch Drehung des Hebelrohres bewirkte Seilaufnahme ist darüber hinaus viel zu gering um größere Leistungen auf die Räder übertragen zu können, wobei es insbesondere nicht möglich ist, höhere Geschwindigkeiten zu erreichen.

Es ist daher Aufgabe der Erfindung, ein Getriebe zu schaffen, bei dem eine Drehrichtungsumkehr der anzutreibenden Einheit leicht möglich und die Drehzahl bzw. das Drehmoment pro anzutreibendes Rad stufenlos verstellbar ist.

Diese Aufgabe wird durch die kennzeichnenden Merkmale des Anspruchs 1 gelöst. Vorteilhafte Ausführungsformen ergeben sich aus den Unteransprüchen.

Die Umschaltbarkeit zwischen Vorwärts- und Rückwärtsfahrt kann erzielt werden, indem auf ein und derselben Trommel nicht nur ein sondern zwei Zugelemente - bevorzugt Seile - aufgewickelt sind, jedoch nicht "endlos" wie oben beschrieben, sondern jedes mit zwei offenen Enden, welche, je ein oben und unten, waagerecht von dem Umfang der Trommel abstreben. Obwohl die Richtung des Abstrebens dieser Enden in keiner Weise Voraussetzung für die Funktion der Gesamtordnung ist - das eine könnte z.B. an der Obenseite nach links, das andere auch an der Obenseite nach rechts abstreben - wird zum besseren Verständnis in der Folge von "oberen" bzw. "unteren" Enden der Seile gesprochen.

Die analogen, z.B. oberen, Enden der Seile sind dabei diejenige Enden, welche bei Zugbeanspruchung die Trommel jeweils in die gleiche Richtung drehen. Dabei sind sowohl die oberen Enden der Seile als auch die unteren Enden intermittierend, abwechselnd, auf Zug beanspruchbar. Werden so beispielsweise die oberen Enden der beiden Seile beansprucht und die unteren Enden etwas angehalten, so wird dadurch die Trommel z.B. in die Vorwärtsfahrtrichtung, angetrieben. Und zwar kontinuierlich, durch Phasen-Unterschied beim intermittierend Beanspruchen beider Seile, was mittels der unten vorzustellenden Übersetzungseinheit leicht realisierbar ist.

Für die Umkehrung der Drehrichtung der Trommel und damit der Fahrtrichtung des Fahrzeuges werden lediglich die beiden unteren Enden der Seile intermittierend und abwechselnd auf Zug beansprucht, während nun die oberen Enden etwas angehalten werden.

Die Art und Weise des Umschaltens von Vorwärts- auf Rückwärtsfahrt ist unter Berücksichtigung der Bedingungen für Drehmomentverstellung und für das weiter Konstanthalten des zu übertragenden Drehmomentes zu bestimmen; siehe unten.

Eine Veränderung der Ausgangsdrehzahl bzw. des Drehmomentes, unabhängig von den Parametern der Eingangsseite und in stufenloser Form, ist dadurch möglich, daß die Seile nicht direkt von den Zylindern intermittierend beaufschlagt werden sondern mittels einer Übersetzungseinheit. Sie besteht aus Schwenkhebeln, welche sich um eine, möglicherweise gemeinsame, fluchtende Achse verschwenken lassen, sowie aus verstellbar verankerten Hydraulik- oder Pneumatikzylindern, welche die Schwenkhebel außerhalb der Schwenkachse angreifen. Sie treiben die Hebel intermittierend verschwenkend an, wodurch die gewünschte intermittierende, translatorische, Bewegung des Seiles wieder erreicht wird.

Sollen mehr als ein Trommel angetrieben werden, z.B. zum Antrieb zweier Antriebsräder oder zweier Antriebsachsen, etc., so können die acht Seilenden der für kontinuierlichen Antrieb benötigten vier Seile mit den acht Enden von vier zweiarmigen Schwenkhebeln verbunden werden, in einer bestimmten Konstellation.

Eine Verstellung der Drehzahl und damit des Drehmomentes kann nun auf einfache Weise erreicht werden durch Verschiebung des Befestigungspunktes des Zylinders auf dem Hebel, Richtung Schwenkachse - oder in umgekehrter Richtung. Eine derartige Verstellung ist leicht stufenlos realisierbar.

Das Übertragen von konstanten Drehmomenten über die ganze Zugstrecke wird ebenfalls mittels der Zylinder möglich. Hierfür werden die beiden oberen Enden der um die "linke" Trommel gewickelten Seile je mit einem der beiden "linken" Arme der zwei "oberen" Schwenkhebel verbunden. Analoges gilt für "links-unten", "rechts-oben" und "rechts-unten".

Die vier Zylinder sind wie folgt mit den Schwenkhebeln verbunden: einer ist links mit einem der beiden oberen Hebeln verbunden; der zweite rechts mit dem anderen der beiden oberen Hebeln; der dritte links mit einem der beiden unteren Hebeln; der vierte rechts mit dem anderen unteren Hebel.

Wenn z.B. der Zylinder links oben ausfährt, wird das obere Ende eines Seiles auf Zug beansprucht. Dadurch zieht das untere Ende dieses Seiles den mit ihm verbundenen Schwenkhebel an und zwingt somit den daran befestigten Zylinder links-unten zum einziehen. Dieses Hineinziehen lässt - an der anderen Seite der Schwenkachse - den Hebel rechts-unten ausschwenken. Damit korrespondiert wieder das vom initierenden Ausfahren des links-obigen Zylinders bewirkte Einschwenken des Hebelarms rechts-oben.

In diesem Vorgang jedoch soll eine elektro-hydraulische Steuerung dafür sorgen, daß das Reagieren der unteren Zylinder auf dem Ausfahren der oberen Zylinder (oder umgekehrt bei umgekehrter Drehrichtung) erst möglich ist, nachdem eine bestimmte Spannung in dem auf Zug beanspruchten Seil aufgebaut worden ist, was sich z.B. im Zylinder feststellen ließe; und nur möglich bleibt, solange diese bestimmte Spannung festgestellt wird. So bleibt die Seilspannung während des Zuges konstant und somit auch das zu übertragende Moment.

Mit der elektro-hydraulischen Steuerung der Zylinder lassen sich weitere Funktionen des Fahrantriebes realisieren bzw. verbessern:
- Man kann damit bremsen, wobei die Verwendung von Drucksensoren und eine "soll-ist" Messroutine ein Blockieren der Räder verhindert.
- Wenn die Umfangsgeschwindigkeit der Trommel größer ist als die Zuggeschwindigkeit des Seiles, rutscht das Seil durch und die Trommel läuft frei. Das ist nützlich in Kurven aber gefährlich beim Talfahrt. Über die Zylinder kann - manuell oder automatisch - gebremst werden.
- Wenn bei Kurvenfahrt das Außenrad freiläuft, bleibt die Hälfte des Moments unbenutzt und fährt das Fahrzeug mit halber Kraft. Mittels gegengestellter Drehmomentverstellung der unterschiedlichen Antriebsräder - durch parallele, d.h. gegenüber die Schwenkachse gegengestellte "Scheibenwischer-Verschiebung" der beiden Triebzylinder und, zur Ausgleich, der beiden reagierenden Zylinder, bekommt das Außenrad weniger Drehmoment dreht dafür aber schneller; für das Innenrad gilt das Umgekehrte.

Die Funktion des Getriebes kann weiter verbessert werden, wenn z.B. die Trommel direkt drehfest mit dem anzutreibenden Rad verbunden ist. Die Trommel könnte nicht direkt selbst vom Seil umwickelt sein, sondern über eine konzentrisch um die Trommel angeordnete Hülse, die vorzugsweise in ihrem Durchmesser zusammengedrückt werden kann. Durch optimal ausgelegte Gleitlagerung oder Walzlagerung zwischen Hülse und Trommel werden die ansonsten zwischen Seilwicklung und Trommelumfang auftretenden Gleitreibungsverluste des unbelasteten Trummes des Seiles nochmal minimiert, was jedoch aufgrund des ohnehin sehr hohen Wirkungsgrades dieser Getriebeart sekundär ist.

Auch die Befürchtung, diese Getriebeart habe aufgrund der ständig auftretenden Gleitreibung zwischen Seil und Trommel nur eine sehr geringe wartungsfreie Einsatzzeit und niedrigen Wirkungsgrad, konnte durch praktische Versuche widerlegt werden.

Zusätzlich können mit vergleichsweise sehr geringem technischem und finanziellem Aufwand auch Allradantriebe verwirklicht werden, indem z. B. vom selben Zylinder und denselben zweiarmigen Schwenkhebeln über eine mehrfache Anzahl von Seilen auch eine mehrfache Anzahl von Trommeln angetrieben werden können.

Da als vermittelnde Komponente ein flexibles Zugelement, wie etwa ein Stahlseil etc., eingesetzt wird, kann die Verbindungsstrecke zwischen Antriebseinheit und anzutreibender Trommel oder Achse auch eine verhältnismäßig komplizierte, mehrfach gewinkelte, schlecht zugängliche Form aufweisen, was bei konventionellen Lösungen mittels Kardanwellen etc. kaum möglich ist oder einen enormen technischen, gewichtsmäßigen und finanziellen Aufwand bedeuten würde.

Es kann hierbei sinnvoll sein, in den Trommeln des Vorderradantriebs eine Übersetzung einzubauen, z. B. im Form eines einfachen Planetensatzes zwischen Trommelinnenseite und Radachse. Damit kann berücksichtigt werden, daß diese Trommel - da die Vorderräder gelenkt werden müssen - räumlich dichter aufeinander stehen als die Trommel, welche die Hinterräder bedienen; weiter kann so für unterschiedliche Durchmesser der Vorder- und Hinterräder korrigiert werden.

Daß diese Übertragung auf Kosten des auf die Vorderräder zu übertragenden Drehmomentes geht, würde in der Kräftebilanz z. B. eines Traktors gut passen.

In Fällen, wobei die Übertragung größer Momente bei niedrigen Geschwindigkeiten weniger bestimmend, das Erreichen hoher Geschwindigkeit jedoch mehr von Bedeutung ist, können die Trommel der Hinterräder mit derartigen Übersetzungen ausgestattet werden.

Weiter sei noch darauf verwiesen, daß die vorliegende Getriebebauart - was gerade bei Arbeitsmaschinen und landwirtschaftlichen Traktoren sehr wichtig ist - zugleich auch die Funktion eines Differentials (wie oben angedeutet) erfüllt, da der bei Kurvenfahrt einseitig auftretende Schlupf aufgrund unterschiedlicher zurückzulegender Weglängen von innerem und äußerem Rad ausgeglichen werden kann.

In diesem Zusammenhang sei erwähnt, daß das Getriebe nicht nur als Hauptantrieb, sondern auch als Hilfsantrieb für Anhänger verwendet werden kann. Bei schlechten Boden- und Wetterbedingungen und schweren Lasten kann bei der Zugmaschine bis zu 50% Schlupf auftreten. Durch auch den Anhänger anzutreiben, ließe sich der Gesamtschlupf wesentlich in Richtung optimaler Werte reduzieren.

Wie bei handelsüblichen Anhängern die Auflaufbremse aktiviert wird, läßt sich auch der erfindungsgemäße Hilfsantrieb aktivieren. Wenn z. B. in der Deichsel ein bestimmter Zugdruck überschritten wird, wird der Antrieb aktiv; sobald in der Deichsel Auflaufdruck gemessen wird, schaltet der Antrieb ab. Bei Rückwärtsfahrt passiert das Umgekehrte: wenn der Anhänger die Zugmaschine zieht, schaltet der Antrieb ab; wenn er von der Zugmaschinen geschoben wird, schaltet der Antrieb zu.

Im Allgemeinen sei noch erwähnt, daß mit dieser Getriebebauart auf sehr einfache Art und Weise, nämlich durch die Spannmöglichkeit der Seile, ein Abbremsen der anzutreibenden Räder möglich ist und somit ein sehr kostengünstiges zusätzliches Bremssystem geboten wird, wo Vorschriften ein Beibehalten mechanischer Bremsen gebieten.

Die Erfindung und Ausführungsformen gemäß der Erfindung sind im Folgenden näher beschrieben. Es zeigen:
Fig. 1 a, b, c das erfindungsgemäße Getriebe mit unterschiedlicher Zylinderanordnung;
Fig. 2 a, b eine beispielhafte Auslegung als Hilfsantrieb für Anhänger;
Fig. 3 a, b eine beispielhafte Auslegung als Allradantrieb.

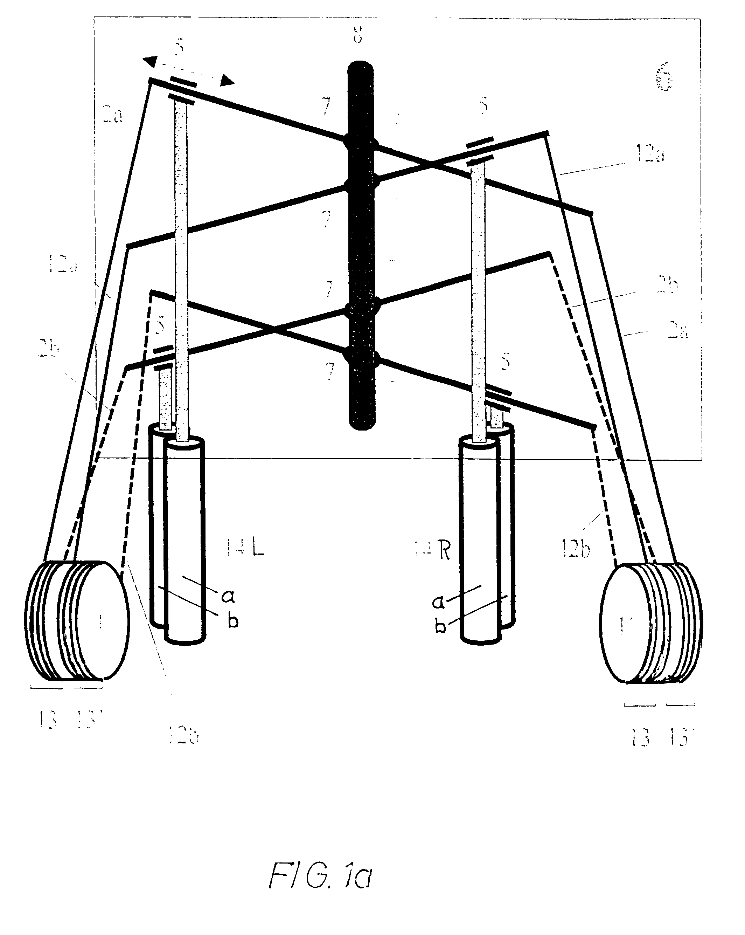

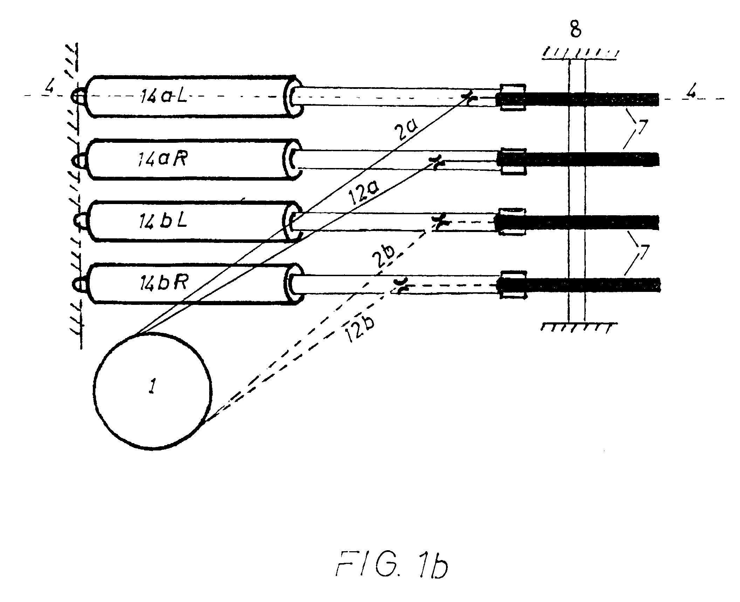

Fig. 1a zeigt eine Getriebeanordnung mit einer Übersetzungseinheit 6, die eine Antriebsbewegung in eine intermittierende Zugbelastung an den Enden von Zugelementen 2, 12 umwandelt.

Die Übersetzungseinheit 6 umfasst ein linkes und rechtes Zylinderpaar 14L, 14R, deren Kolbenstangen jeweils an einem zweiarmigen, schwenkbar gelagerten, Hebelarm 7 angreifen. Die Schwenkarme 7 sind an ihrem mittleren Bereich schwenkbar gelagert und lassen sich mittels der Zylinder 14L, 14R um eine gemeinsame fluchtende Achse 8 verschwenken.

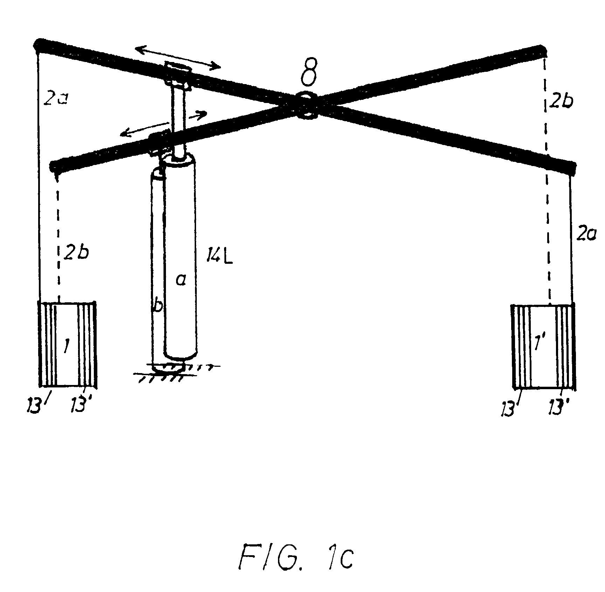

An den Enden der Hebelarme 7 sind die Enden mehrerer Zugelemente 2, 12 - hier Seile - befestigt, wobei die Seile an verschiedenen Wicklungsbereichen um die Trommeln 1, 1' geschlungen sind und jeweils zwei Hebelarme 7 miteinander verbinden. Fig.1 zeigt insgesamt vier Hebelarme 7, die mit vier Seilen verbunden sind, um einen kontinuierlichen Antrieb zu ermöglichen.

Hierfür werden die beiden oberen Enden der um die linke Trommel 1 gewickelten Seile je mit einem linken Arm der zwei oberen Schwenkhebel 7 verbunden, während die unteren Enden der um die linke Trommel 1 gewickelten Seile je mit einem der Arme der zwei unteren Schwenkhebel 7 verbunden sind. Entsprechendes gilt für die rechte Trommel 1' und die beiden rechten Seile.

Von den Zylindern 14 ist der Zylinder 14aL mit einem der zwei oberen Schwenkhebel 7 verbunden, während der Zylinder 14aR mit dem anderen der beiden oberen Schwenkhebel 7 verbunden ist. Der dritte Zylinder 14bL ist mit einem der beiden unteren Schwenkhebel 7 verbunden, während der vierte Zylinder 14bR mit dem anderen der beiden unteren Schwenkhebel 7 verbunden ist. Wenn der Zylinder 14aL links oben ausfährt, wird das obere Ende seines Seiles auf Zug beansprucht. Dadurch zieht das untere Ende dieses Seiles den mit ihm verbundenen Schwenkhebel 7 an und zwingt somit den daran befestigten Zylinder 14bL links-unten zum Einziehen. Dieses Hineinziehen lässt - an der anderen Seite der Schwenkachse 8 - den Hebel 7 rechts-unten ausschwenken. Damit korrespondiert wieder das Einschwenken des Hebelarms 7 rechts-oben.

Eine Veränderung der Drehzahl bzw. des Drehmoments, unabhängig von der Betriebsweise der Zylinder 14, ist dadurch möglich, dass der Befestigungspunkt der Kolbenstangen der Zylinder 14 entlang der Schwenkhebel 7 stufenlos in Richtung der Schwenkachse 8 oder in umgekehrter Richtung verschiebbar ist.

Das erfindungsgemäße Getriebe umfasst ferner eine (nicht gezeigte) elektro-hydraulische Steuerung, die die Aufgabe hat, den Antrieb der Zylinder 14 aufeinander abzustimmen und die Seilspannung zu überwachen. Zum ordnungsgemäßen Betrieb des Getriebes dürfen die unteren Zylinder 14bL, 14bR auf das Ausfahren der oberen Zylinder 14aL, 14bL erst reagieren, nachdem eine bestimmte Seilspannung aufgebaut worden ist, was sich zum Beispiel in den Zylindern 14 feststellen lässt. Dadurch wird sichergestellt, dass das um die Trommel 1, 1' gewickelte Seil ausreichend Reibung erzeugt, um das gewünschte Moment übertragen zu können.

Fig. 1b zeigt eine Getriebeanordnung, bei der alle Zylinder 14 parallel ausgerichtet sind und an der selben Seite der Schwenkhebel 7 angreifen.

Fig. 1c veranschaulicht nochmals das Verschieben der Befestigungspunkte der Kolben 14 entlang der Schwenkhebel 7, wie durch Pfeile gezeigt ist. Die Verschiebung der Kolben ist insbesondere bei Kurvenfahrt nützlich, da ansonsten das Außenrad frei läuft, während nur das Innenrad angetrieben wird und somit die Hälfte der Antriebsleistung ungenutzt bleibt und das Fahrzeug nur mit halber Kraft fährt. Mittels gegensinniger Drehmomentenverstellung der unterschiedlichen Antriebsräder - durch parallele Verschiebung der beiden Antriebszylinder 14a in gleicher Richtung und gleichzeitig der beiden reagierenden Zylinder 14b - bekommt das Außenrad weniger Drehmoment, dreht dafür aber schneller. Für das Innenrad gilt das Umgekehrte.

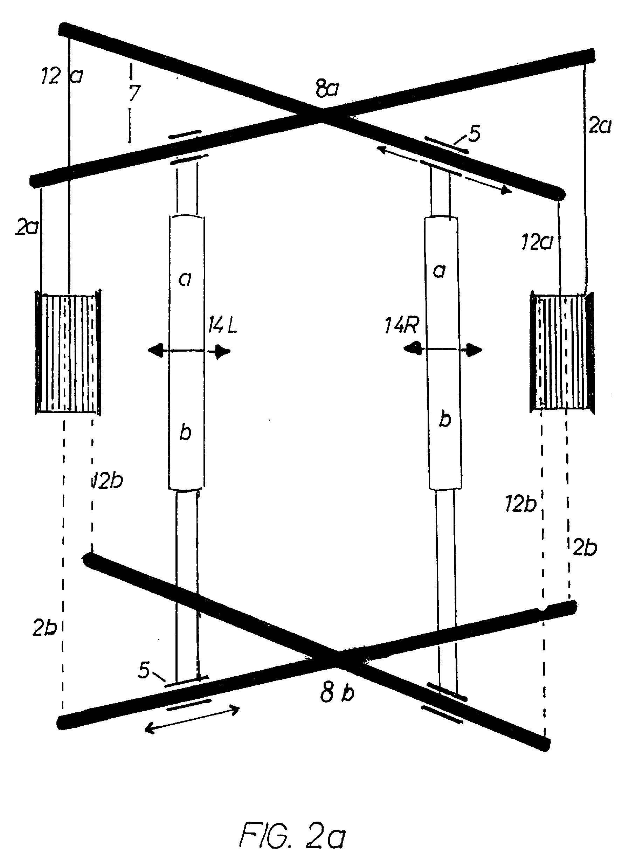

Fig. 2a zeigt eine andere Auslegung des Getriebes, die als Hilfsantrieb für Anhänger geeignet ist. Dabei sind die Zylinder 14 waagerecht angeordnet und an ihren jeweiligen Enden mit Schwenkhebeln 7 verbunden, die um zwei separate Schwenkachsen 8a, 8b verschwenkbar sind.

Eine Verstellung der Drehzahl und damit des Drehmoments kann auf einfache Weise dadurch erreicht werden, dass die Zylinder 14 parallel in Richtung der Seiltrommeln 1, 1' bzw. in entgegengesetzter Richtung verschoben werden.

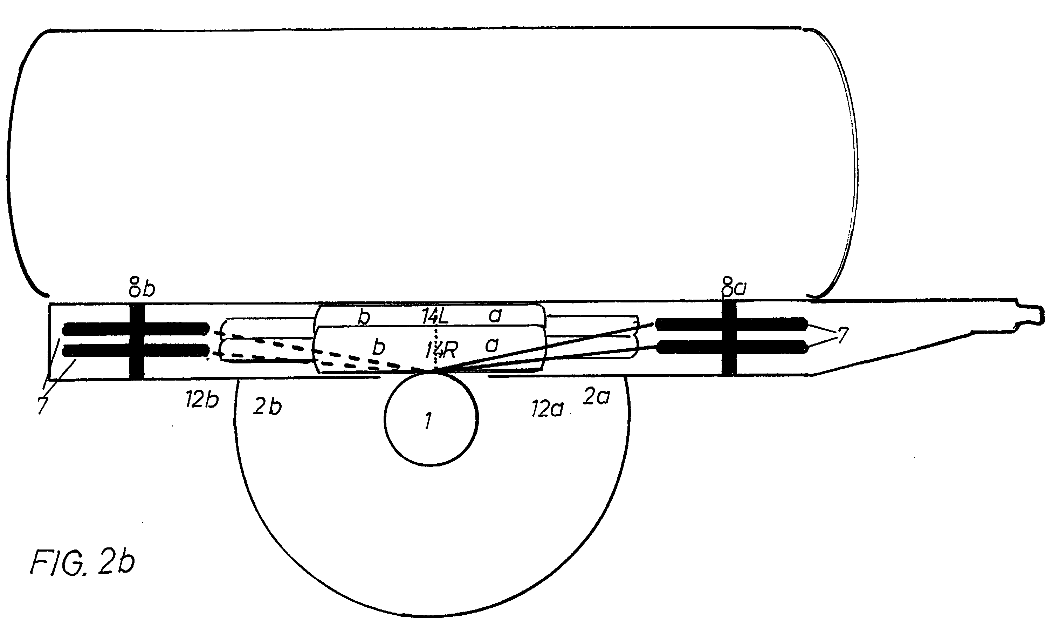

Fig. 2b zeigt nochmals diese Ausführungsform der Fig. 2a, wie sie in einem Anhänger eingebaut ist. Die beiden Seiltrommeln 1, 1' sind dabei drehfest und fluchtend mit der Radnabe verbunden.

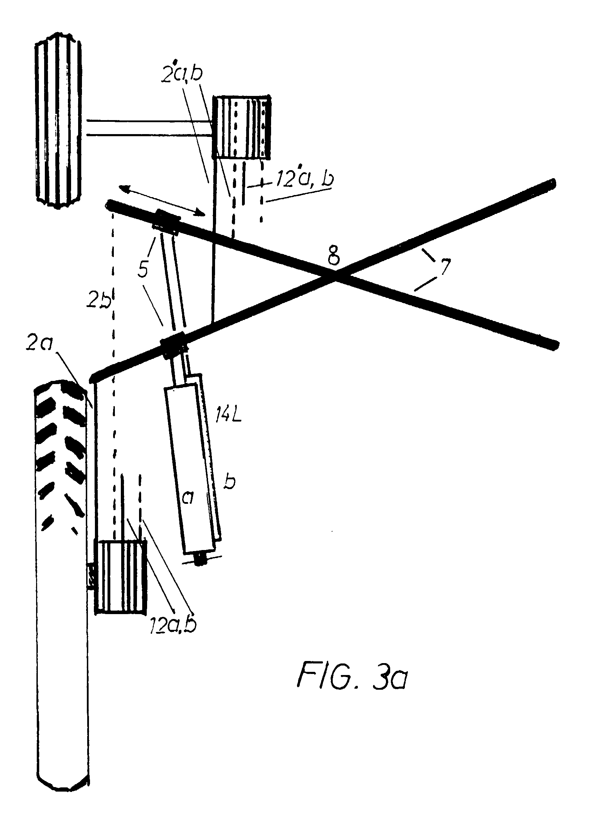

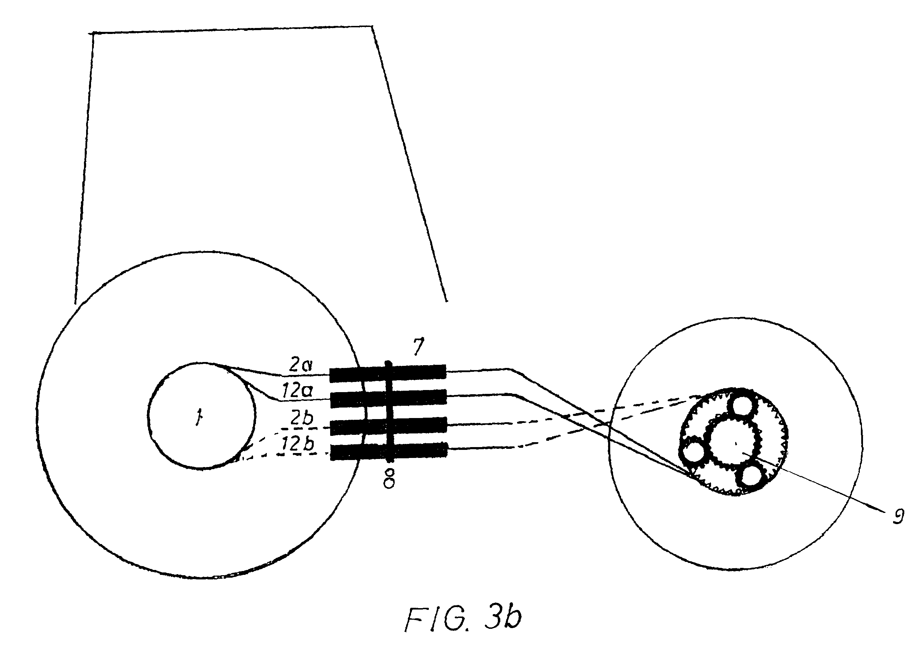

Fig. 3a zeigt einen Seilantrieb mit Auslegung als Allrad-Antrieb für beide Achsen eines Fahrzeugs von oben. Die Zylinder 14, von denen aus Gründen der Übersichtlichkeit nur die Zylinder 14La, b gezeigt sind, üben, wie bisher, über Schwenkhebel 7 ein Drehmoment auf die Trommeln 1, 1' aus, wobei bei dieser Ausführungsform die eine Trommel an der Vorderachse und die andere an der Hinterachse eines Fahrzeugs befestigt ist. Zum Ausgleich unterschiedlicher Raddurchmesser bei Vorder- und Hinterrädern ist eine Übersetzung, z.B. ein einfaches Planetengetriebe 9 zwischen der Trommelinnenseite und der Radachse eingebaut. Durch diese Maßnahme wird zwar das Drehmoment verringert, dieser Effekt ist aber z.B. bei Traktoren durchaus gewünscht.

Diese Erfindung schafft somit einen Getriebetyp, der sehr einfach aufgebaut ist und unter Anwendung einfachster Mittel bei geringsten Kosten einen sehr effektiven Antrieb von Fahrzeugen ermöglicht.

## Patentansprüche

1. Getriebe zum Erzeugen einer im wesentlichen nicht unterbrochenen Drehbewegung aus einer Antriebsbewegung, mit
- wenigstens einer, die ausgangsseitige Drehbewegung liefernden Trommel (1),
- wenigstens zwei um die Trommel (1 ) herumgewickelten, flexiblen Zugelementen (2, 12), die intermittierend auf Zug beansprucht werden, wobei
- die Zugelemente (2, 12) auf zwei getrennten Wicklungsbereichen (13,13') der Trommel (1) aufgewickelt sind, so daß lediglich bei Zugbelastung von Enden (2a, ...) der Zugelemente (2, 12) eine Umsetzung der Antriebsbewegung in eine ausgangsseitige Drehbewegung erfolgt,
**dadurch gekennzeichnet, daß**
- die Antriebsbewegung mittels einer in ihrem Übersetzungsverhältnis verstellbaren Übersetzungseinheit (6) in die intermittierende Zugbelastung der Enden (2a, 12a bzw. 2b, 12b) der Zugelemente (2, 12) umgewandelt wird,
- wobei die Übersetzungseinheit (6)
-- aus zweiarmigen, an einer Schwenkachse (8) schwenkbar gelagerten Hebeln (7), an deren Enden jeweils ein Ende der Zugelemente (2, 12) befestigt ist, und
-- aus Zylindern (14) besteht, die jeweils mit einem Hebelarm der zweiarmigen Hebel (7) mittels einer in Richtung der Schwenkachse (8) verstellbaren Befestigung (5) verbunden sind und die die Hebel (7) in einer Ebene (4) intermittierend verschwenkend antreiben.

2. Getriebe nach Anspruch 1, wobei die Zylinder (14a), welche an der einen Seite der Schwenkachse (8) mit den Hebeln (7) verbunden sind, und die Zylinder (14b), welche an der anderen Seite der Schwenkachse mit den Hebeln verbunden sind, sich sowohl spiegelbildlich zu den mit ihnen korrespondierenden Oben- bzw. Untenzylindern auf der anderen Seite der Schwenkachse (8), gegenüber der Schwenkachse verstellen lassen, wie auch parallel zu den mit ihnen korrespondierenden Zylindern auf der anderen Seite der Schwenkachse und daher umgekehrt gegenüber der Schwenkachse (8) verstellen lassen.

3. Getriebe nach den vorhergehenden Ansprüchen, wobei die Trommel (1 ) drehfest mit einem Rad oder mit einer Achse verbunden ist.

4. Getriebe nach einem der Ansprüche 1 oder 2, wobei die Trommel (1) mittels eines Übersetzungsgetriebes mit einem Rad oder mit einer Achse verbunden ist.

5. Getriebeanordnung, bei der Hinterräder bzw. eine Hinterachse über ein Getriebe nach einem der Ansprüche 1 bis 4 angetrieben wird und bei der ein Vorderrad- bzw. Vorderachsenantrieb durch Hydromotoren erfolgt.

## Claims

1. A transmission for producing a substantially uninterrupted rotary movement from a drive movement, comprising
- at least one drum (1) which delivers the rotary movement at the output side,
- at least two flexible pulling elements (2, 12) which are wound around the drum (1) and which are intermittently loaded in tension, wherein
- the pulling elements (2, 12) are wound on to two separate winding regions (13, 13') of the drum (1) so that it is only when ends (2a, ...) of the pulling elements (2, 12) are subjected to a tensile loading that the drive movement is transformed into a rotary movement at the output side,
characterised in that
- the drive movement is converted into the intermittent tensile loading of the ends (2a, 12a, and 2b, 12b respectively) of the pulling elements (2, 12) by means of a transmission unit (6) which is adjustable in respect of its transmission ratio,
- wherein the transmission unit (6) comprises
-- double-arm levers (7) which are mounted pivotably to a pivot axis (8) and to the ends of which is fixed a respective end of the pulling elements (2, 12), and
-- cylinders (14) which are respectively connected to a lever arm of the double-arm levers (7) by means of a fixing (5) displaceable in the direction of the pivot axis (8) and which drive the levers (7) in an intermittent pivotal movement in a plane (4).

2. A transmission according to claim 1 wherein the cylinders (14a) which are connected to the levers (7) at the one side of the pivot axis (8) and the cylinders (14b) which are connected to the levers at the other side of the pivot axis can be both displaced with respect to the pivot axis in mirror-image relationship with the upper and lower cylinders respectively corresponding thereto on the other side of the pivot axis (8) and can also be displaced in parallel relationship with the cylinders corresponding thereto on the other side of the pivot axis and thus in inverse relationship with respect to the pivot axis (8).

3. A transmission according to the preceding claims wherein the drum (1) is non-rotatably connected to a wheel or an axle.

4. A transmission according to one of claims 1 and 2 wherein the drum (1) is connected to a wheel or an axle by means of a transmission gear.

5. A transmission arrangement in which rear wheels or a rear axle is driven by way of a transmission according to one of claims 1 to 4 and in which a front wheel or front axle drive is effected by hydraulic motors.

## Revendications

1. Engrenage pour la génération d'un mouvement de rotation sensiblement ininterrompu à partir d'un mouvement d'entraînement comprenant :
- au moins un tambour (1) fournissant le mouvement de rotation côté sortie
- au moins deux éléments de traction (2, 12) flexibles enroulés autour du tambour (1) qui sont sollicités en traction par intermittence,
- les éléments de traction (2, 12) étant enroulés sur deux zones enroulées séparées (13, 13') du tambour (1) de sorte que simplement lors de la sollicitation en traction d'extrémités (2a, ...) des éléments de traction (2, 12), il se produit une transformation du mouvement d'entraînement en un mouvement rotatif côté sortie,
caractérisé en ce que
- le mouvement d'entraînement est transformé au moyen d'une unité de transmission (6) réglable dans son rapport de transmission en sollicitation intermittente detraction des extrémités (2a, 12a respectivement 2b, 12b) des éléments de traction (2, 12),
l'unité de transmission (6)
- étant composée de deux leviers (7) à deux bras, logés de manière pivotante sur un axe de pivotement (8), leviers aux extrémités desquels est fixée respectivement une extrémité des éléments de traction (2, 12) et
- de deux vérins (14) qui sont respectivement reliés avec un bras du levier à deux bras (7) au moyen d'une fixation (5) réglable dans le sens de l'axe de pivotement (8) et qui entraînent les leviers (7) dans un plan (4) de manière intermittente en basculement.

2. Engrenage selon la revendication 1, où les vérins (14a) qui sont reliés aux leviers (7) sur un côté de l'axe de pivotement (8), et les vérins (14b) qui sont reliés aux leviers de l'autre côté de l'axe de pivotement peuvent être déplacés en symétrie par rapport aux vérins supérieurs et inférieurs correspondants de l'autre côté de l'axe de pivotement (8), ainsi que parallèlement aux vérins correspondants de l'autre côté de l'axe de pivotement et donc inversement par rapport à l'axe de pivotement (8).

3. Engrenage selon l'une des revendications précédentes, où le tambour (1) est relié rigide à la rotation à une roue ou à un axe.

4. Engrenage selon l'une des revendications 1 ou 2, où le tambour (1) est relié au moyen d'un engrenage démultiplicateur à une roue ou un axe.

5. Disposition d'engrenage où des roues arrière respectivement un essieu arrière est entraîné par un engrenage selon l'une des revendications 1 à 4 et où un entraînement à traction avant est assuré par des moteurs hydrauliques.
